Europäisches Patentamt

European Patent Office

Office européen des brevets

(19)

(11) Veröffentlichungsnummer: **0 264 718**
**B1**

(12) **EUROPÄISCHE PATENTSCHRIFT**

(45) Veröffentlichungstag der Patentschrift:
06.06.90

(51) Int. Cl.⁵: **F16J 15/54**

(21) Anmeldenummer: **87114642.9**

(22) Anmeldetag: **07.10.87**

(54) Aufhängung für einen Dichtring.

(30) Priorität: **24.10.86 DE 3636165**

(43) Veröffentlichungstag der Anmeldung:
**27.04.88 Patentblatt 88/17**

(45) Bekanntmachung des Hinweises auf die Patenterteilung:
**06.06.90 Patentblatt 90/23**

(84) Benannte Vertragsstaaten:
**AT CH FR GB IT LI NL SE**

(56) Entgegenhaltungen:
**DE-A- 2 165 030**
**FR-A- 2 446 971**
**GB-A- 1 102 122**
**US-A- 3 062 151**

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Greune, Christian, Maisacher Strasse 55, D-8080 Fürstenfeldbruck(DE)**

ACTORUM AG

## Beschreibung

Die Erfindung betrifft eine Aufhängung für einen Dichtring, der zwischen einer drehenden Welle und einer konzentrischen Bohrung mit geringem radialen Spiel der Welle angeordnet ist.

Dichtungen werden im allgemeinen mit möglichst geringem Spiel ausgeführt, um Leckströme so gering wie möglich zu halten. Bekannt sind Dichtringe, die in Kammern (z. B. radiale Gleitringdichtungen) mit engem Spiel auf der Welle angeordnet sind und durch Abstützung an einem Festpunkt am Wegdrehen gehindert werden. Dabei tritt jedoch der Nachteil auf, daß der Dichtring sich aufgrund der einseitigen Abstützung einseitig auf der Welle einläuft und an Dichtwirkung verliert. Durch die Reaktionskräfte, zu denen auch Fliehkräfte bei der Anordnung zwischen 2 rotierenden Wellen gehören, würde der Dichtring schnell verschleißen.

Bei Dichtungen von Turbomaschinen besteht außerdem das Problem, daß extrem kleine Montagespiele während des Betriebs vergrößert werden. Diese Spielvergrößerung entsteht durch Kontakte der Dichtelemente untereinander (z. B. Dichtung gegen Welle) oder dem Einfluß von Wärmedehnung, Mittenverlagerung von Wellen, Exzentrizitäten usw. Praktisch definieren diese Einflüsse das tatsächliche Betriebsspiel der Dichtung.

Zwar lassen sich die durch Temperatureinflüsse hervorgerufenen Spielvergrößerungen durch geeignete Materialauswahl und thermische Behandlung von Welle und Dichtung kompensieren, jedoch gelingt dies nicht für die übrigen Effekte wie Mittenversatz der Welle, Aufschwimmen des Rotors im Lagerspiel und ähnliche dynamische Effekte.

Aufgabe der Erfindung ist es, einen Dichtring so aufzuhängen und gegen Mitdrehen abzustützen, daß Mittenfehler aller Art durch Selbsteinstellung des Dichtringes ausgeglichen werden, ohne daß durch einseitiges Einlaufen des Dichtrings auf der Welle die Dichtwirkung nachläßt.

Diese Aufgabe wird erfindungsgemäß dadurch gelöst, daß der Dichtring an zwei am Umfang gegenüberliegenden Stellen mit einem Trägerring beweglich verbunden ist, der um 90° versetzt dazu auf gleiche Weise in der Bohrung eines Gehäuses oder einer zweiten konzentrischen Welle beweglich angeordnet ist. Dies hat den Vorteil, daß keinerlei äußere Reaktionskräfte, die ein einseitiges Einlaufen hervorrufen könnten, auf den Dichtring wirken.

Durch die Anordnung eines Trägerrings zwischen Dichtring und Gehäuse ist eine kräftefreie Bewegung des Dichtrings innerhalb des maximalen Mittenversatzes von Welle und Gehäuse möglich.

Vorteilhafterweise ist der Außendurchmesser des Dichtrings dabei kleiner als der Innendurchmesser des Trägerrings und dessen Außendurchmesser kleiner als der Durchmesser der Bohrung. Auf diese Weise kann sich der Dichtring bei einem Mittenversatz der Welle kräftefrei mitbewegen, ohne daß Verschleiß fördernde Verformungen auftreten.

Der Dichtring weist dabei vorteilhafterweise eine geringere axiale Länge auf als der Trägerring. Da beiderseits des Trägerrings ringförmige Deckplatten angeordnet sind, läßt sich der kürzere Dichtring innerhalb dieser Grenzen axial verschieben, und dieser kann einem axialen Wellenversatz folgen. Aufgrund eines axialen Druckunterschieds beidseitig der Dichtung wird zur Erzielung der Dichtwirkung der Dichtring gegen eine der ringförmigen Deckplatten gepreßt.

In einer Ausführungsform ist die Verbindung des Dichtrings zum Trägerring über Druckstücke ausgeführt, die das zwischen Dichtring und Welle auftretende Reibmoment in Nuten abstützen. Hierdurch wird eine einfache, elastische Koppelung dieser Glieder erreicht. Auf gleiche Weise ist der Trägerring in der Bohrung befestigt.

Die Druckstücke sind vorteilhafterweise mit etwas Spiel ausgeführt, um bei einem Mittenversatz der Welle eine spannungsfreie Abstützung zu gewährleisten.

Vorzugsweise sind mindestens zwei Druckstücke zwischen Dichtring und Trägerring bzw. zwischen Trägerring und Bohrung vorhanden.

Sollte die Welle in beiden Drehrichtungen beweglich sein, so kann in einer anderen Ausführungsform die Koppelung durch Nut-Feder-Verbindungen durchgeführt werden, da hierdurch eine Abstützung der Momente nach beiden Seiten hin möglich ist.

Weitere vorteilhafte Ausgestaltungen der Erfindung sind in den Patentansprüchen 8 und 9 wiedergegeben.

Im folgenden sind drei Ausführungsbeispiele für die Dichtringaufhängung weiter beschrieben. Dabei zeigt:

Fig. 1 den Querschnitt einer erfindungsgemäßen Dichtringaufhängung

Fig. 2 die gleiche Anordnung im Längsschnitt

Fig. 3 eine Ausführung der Dichtringanordnung im Querschnitt, wobei die Druckstücke als Nut-Feder-Verbindungen ausgeführt sind,

Fig. 4 eine Ausführung der Dichtringanordnung im Querschnitt mit in der Nut-Feder-Verbindung angeordneten Wälzkörpern.

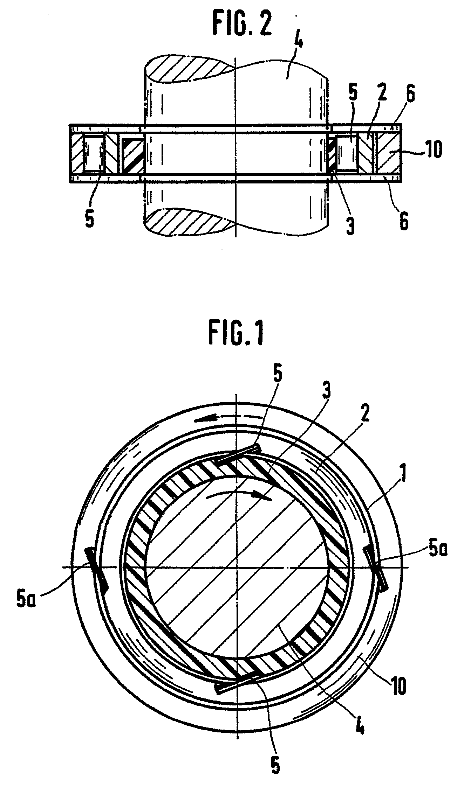

Die Dichtringaufhängung besteht nach Fig. 1 aus einem mit geringem Dichtspalt auf einer Welle 4 sitzenden Dichtring 3. An zwei gegenüberliegenden Stellen ist dieser durch Druckstücke 5 an einem Trägerring 2 abgestützt. Dabei ist die Abstützung derart mit Spiel versehen, daß eine Relativbewegung zwischen Dichtring 3 und Trägerring 2 in radialer Richtung möglich ist. Auf gleiche Weise um 90° versetzt dazu ist der Trägerring 2 über Druckstücke 5a in der Bohrung 1 eines Gehäuses 10 montiert. Dabei sind die Druckstücke 5 bzw. 5a als Stifte ausgeführt, welche eine Abstützung des zwischen Welle 4 und Dichtring 3 entstehenden Reibmoment in Drehrichtung zulassen.

Wie aus Fig. 2 ersichtlich, ist die Dichtringaufhängung durch zwei am Gehäuse 10 befestigte ringförmige Deckplatten 6 in axialer Richtung festgelegt. Die Deckplatten 6 sind dabei so angeordnet, daß der Trägerring 2 radial, jedoch nicht axial verschiebbar ist. Der Dichtring 2 läßt sich wegen seiner geringeren Länge zwischen den Deckplatten 6 axial verschieben.

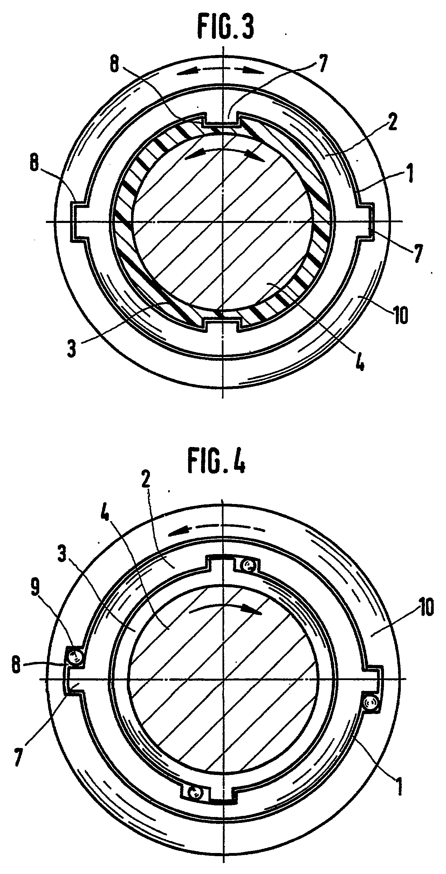

Fig 3 zeigt eine Ausführung für eine in beiden Drehrichtungen bewegliche Welle 4, bei der im Dichtring 3 und der Bohrung 1 des Gehäuses 10 Nuten 8 eingefügt sind, in die im Trägerring 3 angebrachte federartige Erhebungen 7 eingreifen.

Nach Fig. 4 können die Nuten 8 im Dichtring 3 und der Bohrung 1 des Gehäuses 10 in Umfangsrichtung eine derartige Länge aufweisen, daß in Drehrichtung vor den federartigen Erhebungen 7 Wälzkörper 9 in den Nuten 8 angeordnet werden können.

**Patentansprüche**

1. Aufhängung für einen Dichtring, der zwischen einer drehenden Welle (4) und einer konzentrischen Bohrung mit geringem radialen Spiel der Welle angeordnet ist, dadurch **gekennzeichnet**, daß der Dichtring (3) an zwei am Umfang gegenüberliegenden Stellen mit einem Trägerring (2) beweglich verbunden ist, der um 90 Grad versetzt dazu auf gleiche Weise in der Bohrung (1) eines Gehäuses oder einer zweiten konzentrischen Welle beweglich angeordnet ist.

2. Aufhängung für einen Dichtring nach Anspruch 1, dadurch **gekennzeichnet**, daß der Außendurchmesser des Dichtrings (3) kleiner ist als der Innendurchmesser des Trägerrings (2) und dessen Außendurchmesser kleiner ist als der Durchmesser der Bohrung (1).

3. Aufhängung für einen Dichtring nach Anspruch 1 und 2, dadurch **gekennzeichnet**, daß der Dichtring (3) eine geringere axiale Länge aufweist als der Trägerring (2).

4. Aufhängung für einen Dichtring nach Anspruch 1 bis 3, dadurch **gekennzeichnet**, daß die Verbindung des Trägerrings (2) mit dem Dichtring (3) und der Bohrung (1) über Druckstücke (5) erfolgt.

5. Aufhängung für einen Dichtring nach Anspruch 4, dadurch **gekennzeichnet**, daß die Druckstücke (5) mit Spiel in Nuten (8) angeordnet sind.

6. Aufhängung für einen Dichtring nach Anspruch 1 bis 5, dadurch **gekennzeichnet**, daß mindestens zwei Druckstücke (5) zwischen Dichtring (3) und Trägerring (2) bzw. zwischen Trägerring (2) und Bohrung (1) vorhanden sind.

7. Aufhängung für einen Dichtring nach Anspruch 1, dadurch **gekennzeichnet**, daß die Druckstücke als Nut-Feder-Verbindungen (7) ausgeführt sind.

8. Aufhängung für einen Dichtring nach Anspruch 7, dadurch **gekennzeichnet**, daß in Drehrichtung in den Nut-Feder-Verbindungen (7) ein Wälzkörper (9), vorzugsweise eine Rolle angeordnet ist.

9. Aufhängung für einen Dichtring nach Anspruch 1, dadurch **gekennzeichnet**, daß die Druckstücke (5) als kurze Lenker ausgeführt sind.

**Claims**

1. Suspension for a sealing ring which is arranged between a rotating shaft (4) and a concentric bore with a small radial play of the shaft, characterised in that the sealing ring (3) is connected movably to a carrier ring (2) at two opposite points on the circumference, this carrier ring being similarly movably arranged, offset by 90° thereto, in the bore (1) of a housing or of a second concentric shaft.

2. Suspension for a sealing ring according to claim 1, characterised in that the outer diameter of the sealing ring (3) is smaller than the inner diameter of the carrier ring (2) and the carrier rings's outer diameter is smaller than the diameter of the bore (1).

3. Suspension for a sealing ring according to claim 1 and 2, characterised in that the sealing ring (3) has a smaller axial length than the carrier ring (2).

4. Suspension for a sealing ring according to claims 1 to 3, characterised in that the connection of the carrier ring (2) to the sealing ring (3) and the bore (1) is carried out by means of pressure pieces (5).

5. Suspension for a sealing ring according to claim 4, characterised in that the pressure pieces (5) are arranged with clearance in grooves (8).

6. Suspension for a sealing ring according to claims 1 to 5, characterised in that at least two pressure pieces (5) are present between the sealing ring (3) and the carrier ring (2) and/or between the carrier ring (2) and the bore (1).

7. Suspension for a sealing ring according to claim 1, characterised in that the pressure pieces are constructed as tongue-and-groove connections (7).

8. Suspension for a sealing ring according to claim 7, characterised in that a rolling body (9), preferably a roller, is arranged in the direction of rotation in the tongue-and-groove connections (7).

9. Suspension for a sealing ring according to claim 1, characterised in that the pressure pieces (5) are constructed as short guide rods.

**Revendications**

1. Suspension pour un anneau d'étanchéité qui est agencé entre un arbre tournant (4) et un alésage concentrique, avec un jeu radial faible de l'arbre, caractérisée en ce que l'anneau d'étanchéité (3) est relié de manière mobile, en deux points opposés de la périphérie, à un anneau porteur (2) qui est monté mobile de manière identique et décalée de 90° par rapport à la liaison précédente, dans l'alésage (1) d'un carter ou d'un deuxième arbre concentrique.

2. Suspension pour un anneau d'étanchéité selon la revendication 1, caractérisée en ce que le diamètre extérieur de l'anneau d'étanchéité (3) est inférieur au diamètre intérieur de l'anneau porteur (2) dont le diamètre extérieur est lui-même inférieur au diamètre de l'alésage (1).

3. Suspension pour un anneau d'étanchéité selon la revendication 1 et 2, caractérisée en ce que l'anneau d'étanchéité (3) présente une longueur axiale plus faible que celle de l'anneau porteur (2).

4. Suspension pour un anneau d'étanchéité selon les revendications 1 à 3, caractérisée en ce que la liaison de l'anneau porteur (2) avec l'anneau d'étanchéité (3) et l'alésage (1) se fait par l'intermédiaire de pièces de pression (5).

5. Suspension pour un anneau d'étanchéité selon la revendication 4, caractérisée en ce que les pièces de pression (5) sont agencées avec jeu dans rainures (8).

6. Suspension pour un anneau d'étanchéité selon les revendications 1 à 5, caractérisée en ce que au moins deux pièces de pression (5) sont prévues entre l'anneau d'étanchéité (3) et l'anneau porteur (2), et entre ce dernier et l'alésage (1).

7. Suspension pour un anneau d'étanchéité selon la revendication 1, caractérisée en ce que les pièces de pression sont réalisées sous la forme de liaisons par rainure et clavette (7).

8. Suspension pour un anneau d'étanchéité selon la revendication 7, caractérisée en ce que dans le sens de rotation, dans les liaisons par rainure et clavette (7), est agencé un corps roulant (9), de préférence un galet.

9. Suspension pour un anneau d'étanchéité selon la revendication 1, caractérisée en ce que les pièces de pression (5) sont réalisées sous la forme de courts leviers oscillants.

# FIG. 2

# FIG.1

## FIG.3

## FIG.4